# EUROPEAN PATENT APPLICATION

(11) **EP 1 045 526 A1**
(43) Date of publication of application: **18.10.2000**
(21) Application number: 99954392.9
(22) Date of filing: 05.11.1999
(51) Int. Cl.: H04B 5/02

(54) **METHOD OF IDENTIFYING OVERLAPPING TAGS**

(30) Priority: 05.11.1998 JP 31457598
(71) Applicant: Mitsubishi Materials Corporation, Chiyoda-ku, Tokyo 100-004 (JP)
(72) Inventor: UOZUMI, Gakuji, Mitsubishi Materials Corporation, Ohmiya-shi, Saitama 330-0835 (JP); ISHIHARA, Osamu, Mitsubishi Materials Corporation, Ohmiya-shi, Saitama 330-0835 (JP)
(74) Representative: Gille Hrabal Struck Neidlein Prop Roos
(86) International application number: JP9906160
(87) International publication number: WO0028676

(57) **Abstract**

SUBJECT

Whether two or more tags are overlapped or the tag and a metal plate are overlapped, the tags are identified certainly.

A MEANS TO SOLVE

Tags 11-13 appended to articles have RFID devices 16 connected to antenna coils 14 and the antenna coils 14.

Moreover, a resonance circuit 24 comprises the antenna coil 14 and the RFID device 16 and a normally opening switch 26 which opens and closes the resonance circuit 24 is equipped in the resonance circuit 24.

Furthermore, a constant circuit 27 which opens and closes the above-mentioned switch 26 for every predetermined time when current flows to the resonance circuit 24, is connected to the switch 26.

## Description

### TECHNICAL FIELD

The present invention relates to a tag which uses RFID (Radio Frequency Identification) technology.

In detail furthermore, it relates to a system which can identify each tags, even if respectively appended to two or more articles, and overlapped.

### BACKGROUND ART

Conventionally, a half duplex communication channel provided between an interrogator and a plurality of tags within the range of the interrogator. Initially, the existence of the tag is not known to the interrogator, but the tag is activated when the interrogator polls a signal having a single frequency, and the each tag can un-activate itself (Japanese Unexamined Patent Publication No. 8-316888).

In this tag identification system, it comprises so that a first broadcast from interrogator broadcasts a first inquiry message, which contains a first value showing the number of the tags within the range of the interrogator and first signal used for activating all the tags with in a range of the interrogator. Every tag equipped with memory responds to the first reference first reference message and an identifying display which is un-identified by the interrogator is memorized in a memory.

Moreover, it comprises so that the first remains tag formation means equipped to every tag answers reception of the first reference message and a calculation which is based on the first value, a random bit for every tag and memorized an identifying display, is performed, and when the calculation produces a result to which predetermined corresponds, a first set of activated tags which is formed by un-activating tags.

It comprises so that after a first un-activate means which identified a first set of activated each tag changed the identifying display which shows that the identification is successful with the interrogator these tags may be un-activated.

Moreover, it comprises so that a second broadcast means carries out the broadcast of a second inquiry message, which contains a second value showing the un-identified tag within a range of the interrogator, and second signal used for activating all the tag within the range of interrogator a second remained tag formation means and the second activative means form a second set of activated tag using the second value instead of the first value, and the number of the identified tags is increased.

Furthermore, it comprises so that broadcast means, the second remain tag formation means, and the second un-activative means perform the processing using the inquiry message which has a following signal and a following value, until identification of all the tags within a range of the interrogator finishes.

In the above-described tag identifying system, the tags are divided into a small groups, and by turning OFF the power supply of the tag which does not belong to the group, the identification of the tag of one group is carried out at once so that an electric power can be saved.

Each tag puts itself into the group by performing a calculation from a parameter which received from the parameter and a parameter which are memorized by itself.

However, in the tag identifying system shown in the Japanese Unexamined Patent Publication No. 8-316888 official report of the above-mentioned former, if two or more tags are overlapped, a mutual inductance may arise between antenna coil of each tag, and the resonance frequency of the tag may change.

For this reason, even if the interrogator forms the alternative magnetic field in a circumference and thereby oscillates an radio wave (an radio wave on which not overlapped tag resonates) on which the tag resonates from a transceiver antenna of the interrogator, the tag stops resonating and stops supplying an electric power to a RFID device of the tag.

Consequently, the interrogator had the fault that the identification of the overlapped tag was impossible.

The purpose of the present invention is to offer the identifying system which can carry out the identification of the overlapped tags certainly even if two or more tags are overlapped or the tag and the metal plate are overlapped.

### DISCLOSURE OF INVENTION

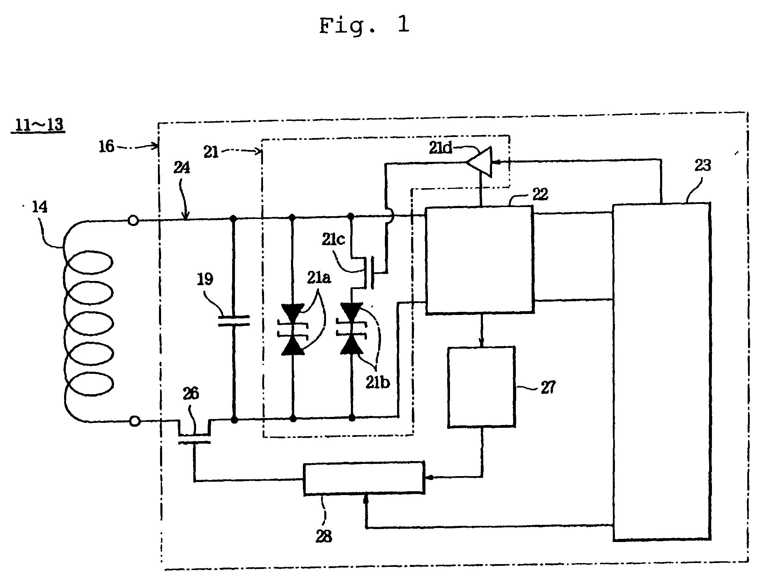

The present invention concerning Claim 1 is an improvement of tags 11-13 which has a RFID device 16 which is appended to an article 17 and connected to an antenna coil 14 and the antenna coil 14, as shown in Figs. 1, 2, and 5.

The novel composition comprises so that in a resonance circuit 24 comprising the antenna coil 14 and the RFID device 16, a switch 26 which opens and closes the resonance circuit 24 is equipped, when the resonance circuit 24 has a current flow, a switch controller 28 which opens and closes the switch 26 with predetermined time is connected to the switch 26, and the behavior of the switch controller 28 depends on the time constant circuit 27 whose time constant is unique to each tag 11-13.

If the above-mentioned tags 11-13 are independent, these tags have the same resonance frequency, however, if these tags 11-13 are overlapped, a resonance frequency changes respectively according to a mutual inductance between of the antenna coil 14 of tags 11-13.

For this reason, if it oscillates a radio wave of the frequency to which an independent tag resonates, the overlapped tags 11-13, can not resonate.

Then, in an identifying system of the tag described in Claim 1, by setting a time constant of a constant circuit 27 of two or more overlapped tags 11-13, to be the value which respectively differs, only the switch 26 of the one sheet of tag 11 may close among two or more tags 11-13 at a certain moment, and the switch 26 of other tags 12 and 13 are open.

Since the mutual inductance does not arise at this time between the one sheet of tag 11 with closed switch 26 and other tags 12 and 13 with opened switch 26, the one sheet of tag 11 with closed switch 26, can resonate by a radio wave, and can identify this tag 11.

Thus, all the overlapped tags 11 can be identified one by one sequentially for a short time.

The invention concerning Claim 2 is the invention concerning Claim 1, furthermore, as shown in Fig. 1, characterized by comprising; a switch controller 28 is equipped between the switch 26 and the constant circuits 27, and the switch controller 28 provides the switch 26 in the state of being opened and closed according to the time constant circuit 27 and in the state of being opened regardless of a signal of the time constant circuit 27.

In the identifying system of the tag indicated by Claim 2, if it oscillates a radio wave of the frequency of which an independent tag resonates, the tags 11-13 do not resonate, however, minute voltage may occur to each tag 11-13.

By the minute voltage, the time constant circuit 27 starts operating, the switch 26 opens and closes with a signal of the time constant circuit 27, a certain one sheet of tag 11 is identified like the invention described in Claim 1.

The switch controller 28 is maintained at the state where the switch 26 of the identified tag 11 opens, regardless of a signal from the time constant circuit 27 after the identification of the tag 11.

Consequently, since the number of un-identified tags 12 and 13 where the switch 26 opens and closes, decrease gradually, you can identify each tag 11-13 certainly.

In addition, the voltage for maintaining at the state where the switch 26 opens is carried out with an electric charge stored in tags 11-13 by resonance.

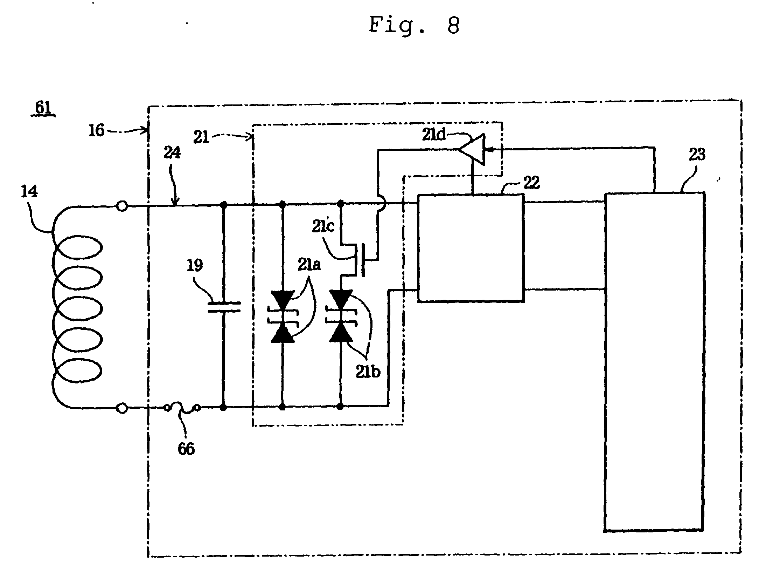

The invention concerning Claim 3, as shown in Fig. 8, is characterized by comprising so that a fuse 66 may melt, when the fuse 66 is equipped in the resonance circuit 24 comprising the antenna coil 14 and the RFID element 16, and current beyond predetermined value flows in the resonance circuit 24.

In the identifying system of the tag described in Claim 3, when it oscillates a radio wave of the frequency to which an independent tag resonates and when an intensity of the radio wave is strengthened gradually, a pair of tags 61, which are at the both side of the overlapped tags, is identified, where the amount of shifts from the resonance frequency of the independent tag is the smallest.

In these tags 61, after identification, the RFID devices 16 themselves pass current beyond predetermined value in the resonance circuits 24, melt the fuses 66, and change into the state where the resonance circuits 24 open.

Following, the pair of the tags 61 is respectively identified, which respectively adjoin the pair of the above-mentioned tags 61, the fuses 66 of these tags 61 are melted like the above, and the resonance circuits 24 become to be the state of being opened.

Thus, all the overlapped tags 61 can be identified by identifying sequentially from the outside of the overlapped tags 61, and the resonance circuits 24 of the identified tags 61 become to be the state of being opened compulsorily.

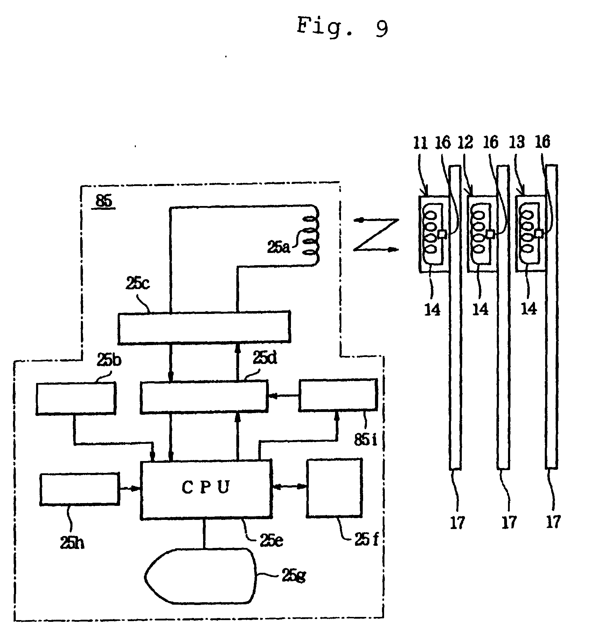

The invention concerning Claim 4 is the invention concerning any Claim 1 or 3 and as further shown in Fig. 9, is characterized by comprising;
The interrogator 85 is prepared with an oscillation circuit 85i in which sweeping the frequency of oscillation is possible
so that the radio wave, oscillated from a transceiver antenna 25a by the interrogator 85 which oscillates the radio wave from the above-mentioned transceiver antenna 25a to the tags 11-13,
have a predetermined frequency range, and the predetermined frequency range is defined a frequency range containing all of the resonance frequency of two or more tags 11-13,
which respectively changes with the overlapping tags 11-13, the resonance frequency of the tags 11-13 whith closed switches or the tag with not melted fuse.

If there is very much number of sheets of the tags 11-13 to be overlapped, the switches of two or more tags 11-13 may close simultaneously every moment (In the case of the tag which has a fuse, no fuse of tags is melted just after starting of sweeping of the resonance frequency.).

In such a case, a mutual inductance does not arise among two or more tags 11-13 with the above-mentioned closed switches, and the resonance frequency of each tag 11-13 changes.

Then, in the identifying system of the tag described in Claim 4, the frequency of an alternative magnetic field (a radio wave which the interrogator 85 oscillates) which the interrogator 85 forms is changed so that two or more tags 11-13 with the closed switches or two or more tags of not melted fuses resonate.

Therefore, the frequency of the alternative magnetic field is swiped with the oscillation circuit 85i so that, at least, two or more tags 11-13 with closed switches or two or more tags of the not melted fuses, resonate.

The range of sweeping frequency contains all the value from minimum to maximum, by the oscillation circuit 85i, of the resonance frequency of two or more tags 11-13 of closed switches or the two or more tags of not melted fuses so that it is possible to maintain the switches of the identified tags 11-13 at the state of being opened one by one or melt the fuses one by one, and all the tags 11-13 can be identified.

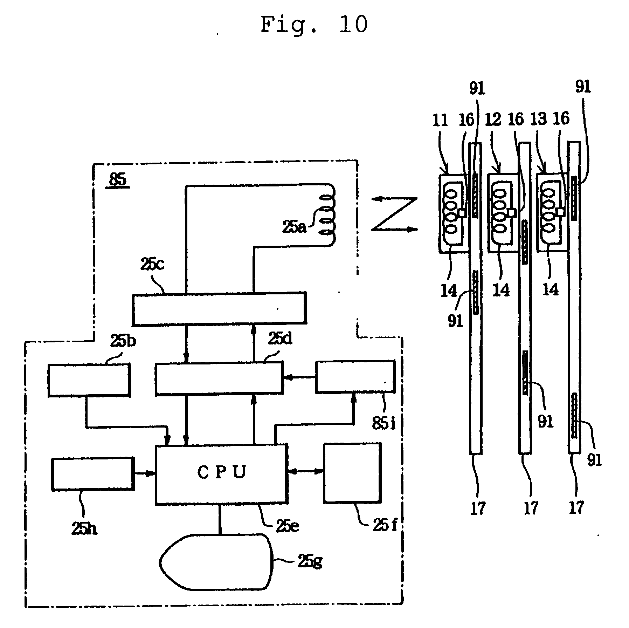

The invention concerning Claim 5 is the invention concerning any Claim 1 or 3 and as further shown in Fig. 10 characterized by comprising;
The interrogator 85 is prepared with the oscillation circuit 85i in which sweeping the frequency of oscillation is possible
so that a radio wave, oscillated from the transceiver antenna 25a by the interrogator 85 which oscillates a radio wave from the above-mentioned transceiver antenna 25a to tags 11-13,
have a predetermined frequency range, and the predetermined frequency range is defined a frequency range containing all of the resonance frequency of one or more tags 11-13 which respectively changes with overlapping one or two or more tags 11-13 and one or more metal plates 91.

When one or more tags 11-13 and one or more metal plates 91 are overlapped, each tags 11-13 has the peculiar resonance frequency depends on the distance with the tag and the metal plate 91 which others overlap, or arrangement, thereby has the resonance frequency different from the resonance frequency which the independent tags 11-13 have.

Then, in the identifying system of the tag described in Claim 5, the frequency of the alternative magnetic field (a radio wave which the interrogator 85 oscillates) which the interrogator 85 forms is changed so that all of overlapped two or more tags 11-13 may resonate.

That is, oscillation circuit 85i sweeps oscillation frequency within the frequency range which contains the maximum and minimum value of resonance frequency of overlapped two or more tags 11-13.

By this, two or more tags 11-13 of closed switches or the tag of not melted fuses are identified one by one and the switches of the identified tags 11-13 are maintained at the state of being opened one by one or the fuses are melted one by one, and all the tags 11-13 can be identified.

### BRIEF EXPLANATION OF DRAWINGS

Fig. 1 circuit composition of a tag of a first embodiment form of the present invention.
Fig. 2 circuit composition showing a state where the overlapped articles with which the tags are appended and an interrogator.
Fig. 3 A-A line sectional view of Fig. 4 showing a tag appended to article.

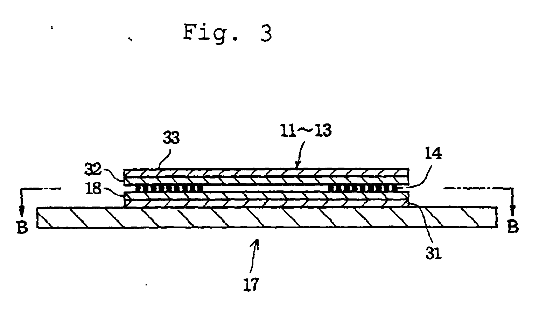

Fig. 4 B-B line sectional view of Fig. 3.

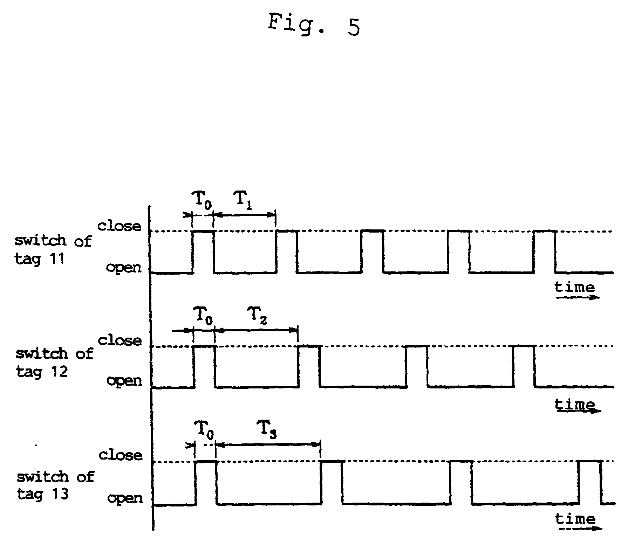

Fig. 5 Time chart which shows on-off time of a switch of each tag.

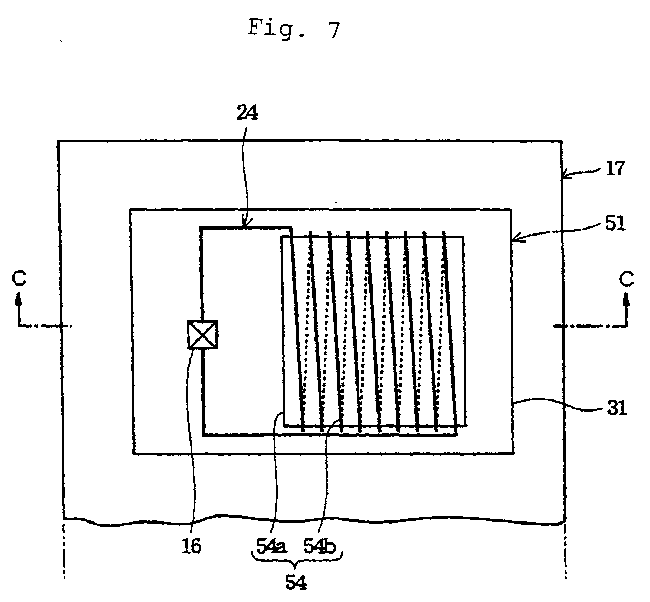

Fig. 6 C-C line sectional view of Fig. 7 showing a tag appended to article of a second embodiment form of the present invention.

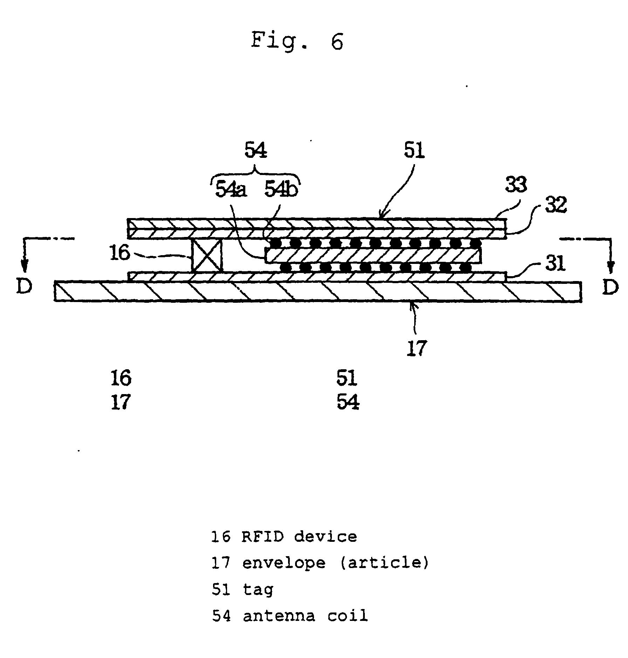

Fig. 7 D-D line sectional view of Fig. 6.
Fig. 8 circuit composition corresponding to Fig. 1 showing a third embodiment form of the present invention.

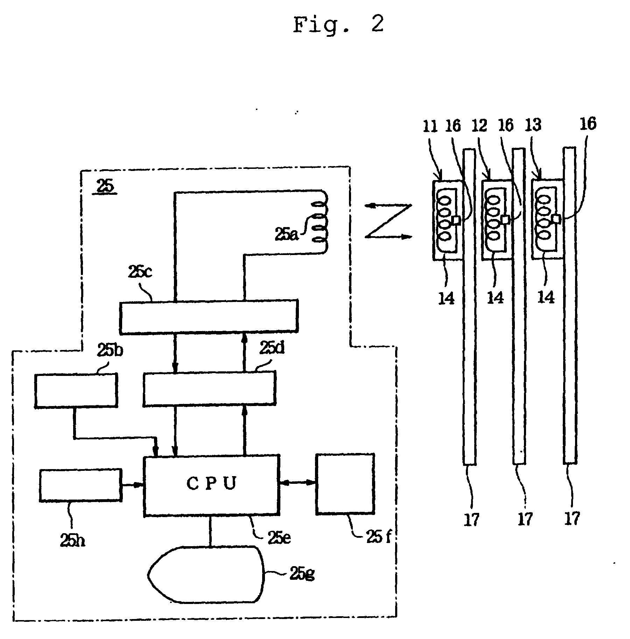

Fig. 9 circuit composition corresponding to Fig. 2 showing a fourth embodiment form of the present invention.
Fig. 10 circuit composition corresponding to Fig. 2 showing a fifth embodiment form of the present invention.

### THE BEST FORM FOR INVENTING

Following, a first embodiment form of the present invention is explained based on the drawings.

As shown in Fig. 1 and 2, tags 11-13 have RFID devices 16 connected to an antenna coil 14 and the antenna coil 14.

Moreover, with the embodiment form, the number of tags 11-13 is three, and they are appended to articles 17, respectively, and are overlapped with the articles 17.

Each tag 11-13 identically comprises except a time constant of a time constant circuit 27 mentioned later.

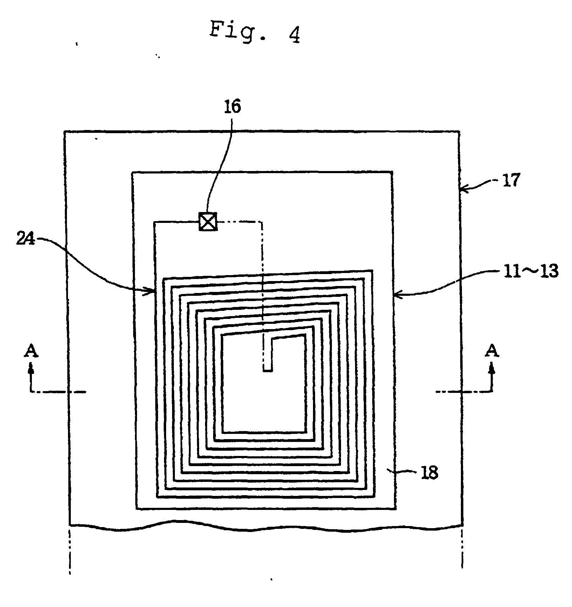

As shown in Fig. 3 and 4 in detail, the antenna coil 14 is formed with an insulated wire in the shape of a swirl of an abbreviated square, and sticking it on a base board 18, or is formed in the shape of a swirl of an abbreviated square by removing an unnecessary portion by the etching method or the piercing method from the base board 18 laminated conductive material such as aluminum foil and/or copper foil.

The RFID device 16 is stuck on the base board 18 (Fig. 4), and has a capacitor 19, an ASK modulation circuit 21, a voltage regulator 22, and a modulation/demodulation logic part 23 (Fig. 1).

The capacitor 19 is connected in parallel to the antenna coil 14 and comprises the resonance circuit 24 with the antenna coil 14.

In the present embodiment form, the RFID device 16 does not have a battery.

For this reason, when the antenna coil 14 receives a radio wave of specific resonance frequency, a voltage produced by its electric-magnetic inductance is impressed to the capacitor 19.

It comprises so that the voltage impressed to the capacitor 19 is rectified and stabilized by the voltage regulator 22, and is supplied to the modulation/demodulation logic part 23, thereby activating the tags 11-13.

Moreover, a memory (not shown) which memorizes data peculiar to the article is prepared in the modulation/demodulation logic part 23.

The memory comprises so that it is a ROM (read only memory), a RAM (random-access memory), or a non-volatile memory, and while memorized data is read according to a read-out command by data communications with the radio wave from an interrogator 25 (later mentioned) under control of the modulation/demodulation logic part 23, and writing the data may be performed according to a write-in command from the interrogator 25.

Moreover, the ASK modulation circuit 21 is a circuit which modulates the amplitude of voltage and comprises;
a pair of first zener diodes 21a connected in parallel to the capacitor 19,
a pair of second zener diodes 21b connected in parallel to the pair of first zener diodes 21a, a switch 21c for modulation connected in series to the pair of second zener diodes 21b,
and an operational amplifier 21d which carries out on-off of the switch 21c for the modulation.

A signal from the modulation/demodulation logic part 23 is amplified by an operational amplifier 21d, and on-off of the modulation switch 21c is controlled by an amplified signal.

It comprises so that, if the switch 21c for modulation turns on, the voltage supplied to the antenna coil 14 is restricted to predetermined value (for example, 3V), and when the switch 21c for the modulation turns off, the voltage supplied to the antenna coil 14 is restricted to predetermined value (for example, 9V).

In addition, a PSK modulation circuit (frequency modulation) or a FSK modulation circuit (phase modulation) may be used instead of the ASK modulation circuit 21.

The characteristic composition of the present embodiment form comprises so that
the normally closed switch 26 which opens and closes the resonance circuit 24 when current flows in the resonance circuit 24, is equipped in the above-mentioned resonance circuit 24,
the time constant circuit 27 which opens and closes the switch 26 for every predetermined time is connected to the switch 26,
and an opening time of the switch 26 determined by the time constant circuit 27 may change with each tag 11-13 (Fig. 1).

The above-mentioned switch 26 is a normally closed field effect transistor (FET) which closes when the voltage is not impressed, and opens when predetermined voltage is impressed.

The time constant circuit 27 comprises with the direct-current voltage from the above-mentioned voltage regulator 22 to repeat that it opens the switch 26 during predetermined time period by impressing a predetermined voltage after closing the switch 26 during a predetermined time period by impressing voltage to the switch 26.

The time constant circuit 27 of each tag 11-13 has a peculiar constant, respectively.

For example, as shown in Fig. 5, the time period which has closed each switch 26 of the three sheets of tags 11-13 is identically set up with T0, respectively, and the time period which is opening the switch 26 is set as the value which differs from T1, T2, and T3, respectively.

In addition, the time T0 is the time period in which the interrogator 25 can read and can write the tags 11-13.

Moreover, a switch controller 28 comprises so that
it is equipped between the switch 26 and the time constant circuit 27,
and is changed into the one state (hereinafter a time-constant-circuit dependence state) where the switch 26 opens and closes with a signal (voltage) of a time constant circuit 27,
or the other state (hereinafter a switch normally opening state) where the switch opens regardless of a signal (voltage) of a time constant circuit 27.

The switch controller 28 can change the switch 26 into the above-mentioned time-constant-circuit dependence state, and into the switch normally open state with a signal from the modulation/demodulation logic part 23.

As the article 17, for example, an envelope of a cash registered mail, in which only a bill (not shown) is enclosed.

In this case, the data, an amount of money of the cash enclosed in the envelope, a post office name which relayed conveyance of the envelope and a carrier name, or date and time of arriving or leaving of the envelope and so on, are memorized in the RFID device 16.

In addition, a mark 31 of Fig. 3 is a first adhesives layer for sticking the base board 18 on the surface of the article 17, a mark 33 is a cover layer which covers the antenna coil 14 and the RFID device 16 on the above-mentioned base board 18 and, further, a mark 32 is a second adhesives layer for sticking the cover layer 33 on the base board 18.

On the other hand, the interrogator 25 is a RFID controller and has the transceiver antenna 25a, a power-supply circuit 25b, a Radio-Frequency (RF) circuit 25c, and a modulation/demodulation 25d (figure 2).

Moreover, a memory 25f, a display 25g and an input means 25h are connected to a CPU 25e of the interrogator 25.

In addition, with the present embodiment form, although three sheets of tags are overlapped with the articles, two or not less than four sheets of tags can be overlapped with the articles.

Moreover, although the RFID device which does not have a battery with the present embodiment form, the RFID device which has the battery of a solar cell or other batteries is available.

Thus, an example of the comprised identifying system of the tag is explained.

In the example, the articles 17 are three envelopes of the cash registered mail with which the bill is enclosed, and the tags 11-13 are stuck on these articles 17, respectively.

The data (the amount of money of the cash enclosed with the envelopes, the post office name which relayed conveyance of the envelopes and a carrier name, or date and time of arriving or leaving of the envelopes and so on) peculiar to the articles are memorized by the memories of the RFID devices 16 of tags 11-13.

In the state where the overlapped three envelopes 17 which the stuck tags 11-13, respectively, i.e., the state where the three envelopes 17 are made into the bunch, since the switch 26 of each tag 11-13 closes, a mutual inductance may arise between the antenna coil 14 of each tag 11-13, and the resonance frequency of each tag 11-13 may change if the radio wave of a predetermined frequency is oscillated from the interrogator 25.

That is, the self-inductance of each tag 11-13 increases by mutual inductance of each tag 11-13.

However, the time constant circuit 27 operates with the voltage, and the switch 26 opens and closes with a signal of the time constant circuit 27, since the minute voltage occurs to each tag 11-13 even if each tag 11-13 does not resonate.

Moreover, since the time constants of the time constant circuits 27 of the three sheets of overlapped tags 11-13 are respectively set in deferent values, only the switch 26 of the one sheet of tag 11 is likely to be closed among the three sheets tags 11-13 at a certain moment, while the switches 26 of other tags 12 and 13 is opened.

Since, between the one sheet of tag 11 with the closed switch 26 and other tags 12 and 13 with the opened switch 26, the mutual inductance does not arise, the tag 11 with the closed switch 26 resonates by the above-mentioned radio wave.

On the other hand, the radio wave oscillated from the above-mentioned interrogator 25 is a digital signal formed into two values.

The digital signal is emitted from a signal generator (not shown) of the interrogator 25, is put on the subcarrier of a predetermined frequency by the modulation/demodulation 25d, thereby modulated.

In the Radio Frequency (RF) circuit 25c, a modulated signal is amplified and it oscillates from the transceiver antenna 25a.

The ASK (amplitude modulation), the FSK (frequency modulation) or the PSK (phase modulation) is available to the above-mentioned modulation, for example.

The interrogator 25 reads the peculiar information from the memory of the RFID device 16 of the above-mentioned predetermined resonated tag 11.

Therefore, the voltage produced by an electric-magnetic induction is impressed to the capacitor 19 by resonance of the above-mentioned predetermined tag 11, and the voltage regulator 22 rectifies and stabilizes the voltage.

At the same time it supplies the voltage to the modulation/demodulation logic part 23 and activates the RFID device 16.

In the modulation/demodulation logic part 23, only the signal required for demodulation is taken in, the question signal is made to reproduce from an original digital signal and the data of the envelope 17 including the enclosure amount of money peculiar to an envelope 17 is oscillated to the interrogator 25 from a memory.

The oscillation of the data of the enclosure amount of money is performed by amplifying and modulating for the ASK modulation in the circuit 21 of the RFID device 16, and oscillating from the antenna coil 14 is formed.

Following, with the interrogator 25 which received the data, the peculiar information on the concerned envelope 17 can be checked with a display 25g.

When writing predetermined data in the memory of the RFID device 16 of the tag 11 here, it writes in from a 25h of the input means, the data (such as for example, the date, time and a post office name, when/where a check is performed i.e., the date, time and a post office name, etc when/where the contents about an envelope is read from the tag), are inputted, and it oscillates to the tag 11.

The data of the write-in matter are written in the memory of the RFID device 16.

After the writing to the memory of the RFID device 16 of the predetermined tag 11 is completed, a signal is sent to the switch controller 28 from the modulation / demodulation logic part 23 of the tag 11, and regardless of a signal from the time constant circuit 27, it maintains the state (switch normally opened state) where the switch 26 of the above-mentioned identified tag 11 opens, thereby maintains the state where the resonance circuit 24 of the tag 11 to be opened.

Impressing a predetermined voltage to the switch 26 can be continued until all the overlapped tags 11-13 are identified.

The voltage, for maintaining at the state where the switch 26 opens, is generated by the electric charge stored in the capacitor 19 by resonance.

Moreover, at a certain moment, among the remaining two sheets of tags 12 and 13, only the switch 26 of one sheet of tag 12 may close and the switch 26 of the other tag 13 may open.

At this time, after identifying the tag 12 of the closed and resonated switch 26 like the above mentioned, the state where the resonance circuit 24 opened, is maintained.

And the state where the resonance circuit 24 is opened, is maintained, after identifying the tag 13 like the above mentioned, when the switch 26 of the tag 13 which remained at the end closes.

Thus, all the overlapped tags 11-13 can be identified one by one serially for a short time.

Moreover, as mentioned above, since the un-identified tags 11-13 whose switches 26 open and close cyclically, decrease gradually, identifying each overlapped tag 11-13 can be still certain.

Figs. 6 and 7 show a second embodiment form of the present invention.

In Figs. 6 and 7, the same marks as in Figs. 3 and 4 show the same parts.

With the present embodiment form, an antenna coil 54 has a magnetic material 54a used as a magnetic core, and main part of a coil 54b wound around the magnetic material 54a.

As for the form of the magnetic material 54a, a plate, a cylinder, a solid prism and a cylinder, etc. may be used.

The hollow cylinder may be one in which the cylinder is formed by assembling a plurality of arc-shaped pieces, or one in which the cylinder is formed by a thin film or foil.

Moreover, as the magnetic material 54a, it is recommended comprising;
(1) a laminating object having a plurality of thin films or thin boards of a soft magnetic metal and a plurality of insulating thin films or thin boards alternatively overlapped, or a laminating object in which a plurality of thin films or thin boards of the soft magnetic metal are overlapped such that the surface thereof are insulated,
(2) a compound material of a powder or flakes of the soft magnetic metal and a plastic, a compound material of the powder or flakes of the soft magnetic metal, the powder of a ferrite, and a plastic,
(3) a compound material of the powder of a soft magnetic metal or flakes, the powder of a ferrite, and a plastic,
(4) a compound material of the powder of a ferrite, and a plastic and
(5) a sintered ferrite etc.

In the above-mentioned (1) - (5), when it is required that magnetic permeability does not change with surrounding temperature and the antenna coil comprises a resonance circuit whose resonance frequency does not change, it is preferable to use the soft magnetic metal as magnetic material, and the form of magnetic material is preferable to be a thin film, powder, or flakes so that an eddy current is not produced and the resonance characteristic is not reduced, when resonance frequency is high.

In the above-mentioned (1), it is preferable to use a film made of iron base amorphous, cobalt base amorphous, a permalloy or the silicon steel, with a thickness of 5-250 micrometers, as the soft magnetic metal thin film, and it is preferable to use the insulating resin film made of a polyester film, a poly vinylidene chloride, a poly vinyl chloride or a polyethylene terephthalates (PET), with a thickness of 5-50 micrometers, as an insulating thin film.

Moreover, an insulated paper is sufficient as the insulating thin film.

It is preferable to use a carbonyl iron powder or a reduced-iron powder whose diameter is 0.1-30 micrometers, as the soft magnetic metal powder of the above (2) or (3).

Furthermore, after the soft magnetic metal flakes made of an iron, the permalloy, an amorphous alloy, etc. are divided by the atomize method and are fabricated to the soft magnetic metal powder, it is preferable to use the flakes obtained by mechanically shaping the soft magnetic metal powder to be flat with a thickness of 0.1-10 micrometers.

It comprises identically to the first embodiment form except the above.

Thus, unlike the tag of the first embodiment form, the tag 51 is comprised to have the feature that the mutual inductance with other tag 51 or the metal plate is small, when it is overlapped on other tag 51 or the metal plate.

Since the identifying system of the overlapped tag is the same with that of the first embodiment form, the explanation is omitted.

The Fig. 8 shows a third embodiment form of the present invention.

In Fig. 8, the same marks as Fig. 1 show the same parts.

In the present embodiment form, it comprises so that it does not have the switch, the time constant circuit, and the switch controller of the first embodiment form, but a fuse 66 is equipped in the resonance circuit 24 comprising the antenna coil 14 and the RFID device 16, and when current beyond predetermined value flows in the resonance circuit 24, the fuse 66 melt down.

Moreover, the interrogator (not shown) comprises to be able to change strengthening and weakening gradually the intensity of the radio wave which is oscillated toward the overlapped tag 61.

It comprises identically to the first embodiment form except the above.

Thus, in the comprised identifying system of the tag, it oscillates the radio wave on which the independent tag resonates toward two or more overlapped tags 61, the intensity of the radio wave is strengthened gradually, and the magnetic field intensity is enlarged gradually.

On the other hand, the pair of the outside of overlapped tags 61 have the smallest amount of shifts from the resonance frequency of the independent tag among the overlapped tags 61.

For this reason, if the above-mentioned magnetic field intensity becomes large beyond predetermined value, since the electromotive force of the antenna coil 14 of the pair of the outside of the tags 61 become more than the operation voltage of the RFID device 16 of the tags 61, the RFID device 16 of the tags 61 is activated, and it operates, and communicates with the interrogator, namely, the interrogator performs reading and the writing of the tags 61.

Since the RFID device 16 passes large current by itself in the resonance circuit 24 and melts down a fuse 66, after completing the communication with the interrogator, therefore the resonance circuit 24 is opened, and even if an interrogator oscillates the radio wave, the overlapped tags 61 do not resonate.

When the signal from the pair of the above-identified tags 61 stops, magnetic field intensity is reduced and the interrogator enlarges magnetic field intensity gradually by strengthening intensity of the radio wave oscillated again after that.

On the other hand, since the resonance circuit 24 of the pair of the above-mentioned tags 61 have already been opened, the amount of shifts of the resonance frequency with the pair the tags 61 which respectively adjoin the pair of the above-mentioned tags 61 where the communication stopped from the independent tag, become the smallest.

If the above-mentioned magnetic field intensity becomes large beyond predetermined value, since the guidance electromotive force of the antenna coils 14 of the tags 61 may become more than the operating voltage of the RFID devices 16, the RFID devices 16 pads large current by themselves in the resonance circuit 24, and melt the fuses 66, after the RFID devices 16 of the above-mentioned tags 61 operate communicating with the interrogator and complete the communication.

All the tags 61 can be identified by repeating the above-mentioned procedure.

Thus, all the overlapped tags 61 can be identified sequentially from the outside tags 61 to inside tags 61 among the overlapped tags 61 with the procedure which the resonance circuits 24 of the identified tags 61 are opened compulsorily.

Fig. 9 shows a forth embodiment form of the present invention.

In Fig. 9, the same marks as Fig. 2 shows the same parts.

In the present embodiment form, the radio wave oscillated from the transceiver antenna 25a by the interrogator 85 which oscillates the radio wave from the transceiver antenna 25a to the tags 11-13, and identifies the tags 11-13 equipped with an oscillation circuit 85i in which a sweep is possible, within a range of a predetermined frequency.

A predetermined frequency range is defined that a frequency range contains all of the resonance frequency of the tags 11-13, which is respectively changed by overlapping the tags 11-13, or whose switches have closed.

It comprises identically to the first embodiment form except the above.

In addition, in the present embodiment form, although the tag equipped with the switch is recommended, the tag with the fuse shown in the third embodiment form is also available.

In this case, it comprises so that the above-mentioned predetermined frequency range is a frequency range containing all of the resonance frequency, which respectively changes by overlapping the tags, of the tags whose fuses are not melting, and after the identification of the tags, the fuses of the tags is melted down.

If there is very much number of sheets of the tags 11-13 to be overlapped, the switches of two or more tags 11-13 may close simultaneously every moment.

In such a case, the mutual guidance action is produced among two or more tags 11-13 in which the switches close, and the resonance frequency of each tag 11-13 changes.

Then, the frequency of the police-box magnetic field (a subcarrier which carries a question signal) which the interrogator 85 forms is changed so that two or more tags 11-13 in which the switches closes simultaneously at least may resonate.

Therefore, the oscillation circuit 85i sweeps the oscillation frequency from minimum to maximum in a range of the resonance frequency which contains all of the value of the resonance frequency of two or more tags 11-13 in which the switches close simultaneously.

The radio wave is received by the antenna coil 14 of the tag 11 which has the resonance frequency which resonates in a predetermined frequency.

If the predetermined tag 11 receives as mentioned above, the interrogator 85 suspends the sweeping of frequency, and it reads information peculiar to the tag 11, writes predetermined information in the tag 11, and further, may maintain the tag 11 at the state (normally opening state of the switch) where the switch of this tag 11 is opened.

Then, the interrogator 85 resumes the above-mentioned suspended sweeping, of the frequency.

That is, the radio wave is received by the antenna coil 14 of the tag 12 which has another predetermined resonance frequency, by changing the frequency of a radio wave (the carrier which carries the interrogation signal) oscillated from the transceiver antenna 25a of the interrogator 85 by the oscillation circuit.

And when the tag 12 resonates by other radio wave of the above predetermined frequency, the interrogator 85 suspends the sweeping of frequency again, it reads the data from the tag 12 like the above, writes a predetermined information in the tag 12, and further maintains the tag 11 at the state where the switch of the tag 12 is opened.

Thus, two or more tags 11-13 with closed switches can be identified one by one, and all the tags 11-13 can be identified by maintaining at the state where the switches of the identified tags 11-13 are opened one by one.

Since the operation except the above is the same in abbreviation as that of the first embodiment form, the explanation of a repetition is omitted.

The Fig. 10 shows a fifth embodiment form of the present invention.

In Fig. 10, the same marks as Fig. 2 shows the same parts.

At the present embodiment form, the oscillation circuit 85i which enable the sweeping the radio wave oscillated from the above-mentioned transceiver antenna 25a within a predetermined frequency range is equipped in the interrogator 85 which oscillates a radio wave from the transceiver antenna 25a to the tags 11-13 in order to identify the tags 11-13.

A predetermined frequency range is a frequency range containing all of the resonance frequency of 1 or more tags 11-13, which respectively change by overlapping 1 or more tags 11-13 on 1 or more metal plates 91.

Moreover, coins (metal plates) other than bills are enclosed with the articles 17 to which tags 11-13 are respectively appended.

It comprises a composition except the above identically to the first embodiment form.

In addition, although the coin is exemplified as the metal plate, the aluminum foil or other metal plates appended to the articles such as the envelope are also available.

When 1 or more tags 11-13 and 1 or 2 or more coins 91 are overlapped, each tag 11-13 has the peculiar resonance frequency depends on the distance or the arrangement with other overlapped tags and the coins 91, thereby has different resonance frequency from the resonance frequency of the independent tags 11-13.

Moreover, even if the number of the tags with closed switches is one at a certain moment, the resonance frequency of a tag changes with existence of a coin 55.

Then, the frequencies of the alternative magnetic field (the carrier which carries the interrogation signal) which the interrogator 85 forms is changed so that all of the overlapped tags 11-13 may resonate.

That is, the oscillation circuit 85i sweeps oscillation frequency within the frequency range which contains the maximum and the minimum value of resonance frequency of overlapped two or more tags.

And sweeping the radio wave like the forth embodiment form, suspending the sweeping of the radio wave, reading the tag with the closed switch, writing a predetermined information in the tag, maintaining the switch of the identified tag to be opened, and resume the sweeping of the radio wave are operated.

Since each tag 11-13 with the closed switches is identified by repeating the operation one by one and the switches of the identified tags 11-13 are maintained at the state of being opened one by one, all the tags 11-13 can be identified.

In addition, in the present embodiment form, although the equipped tag with a switch is recommended, it also may be the equipped tag with a fuse shown in the third embodiment form.

In this case, the fuse of the tag is melted down after the identification of the tag.

### [Examples]

Following, examples of the present invention are explained in detail with a comparative example.

### 〈Example 1〉

Although not illustrated, the switches which can open and close the resonance circuits are equipped in the resonance circuits which comprises the antenna coils and the RFID devices, and the 50 tags having the same resonance frequency are produced.

Only the switch of arbitrary tag is closed among these tags, and the switches of the other tags are opened.

In the state where these tags are overlapped, a radio wave of a predetermined frequency (the radio wave of the frequency in which the independent (not overlapped) tag resonates) is oscillated toward the tag from the interrogator.

Consequently, the interrogator can identify the above arbitrary tag.

Moreover, at this time, the maximum distance (the maximum distance between the transceiver antenna of the interrogator and the tag) in which the identification is possible is of the same extent with the maximum distance in case the tag exists independently.

### 〈Example 2〉

As shown in Figs. 1 - 5, 50 sheets of the tag 11-13 in which the time constant circuits 27 are connected to the switches 26 through the switch controllers 28 are produced, by comprising the antenna coils 14 and the RFID devices 16, and having the switches 26 in the resonance circuits 24 where the resonance frequency is the same.

The switch 26 is "normally-on" FET, and the time constant of the time constant circuit 27 is set up so that it might change with each tag 11-13.

When these tags 11-13 are overlapped and the radio wave (the radio wave of the frequency in which the independent (not overlapped) tag resonates) is oscillated toward the tags 11-13 from the interrogator 25 in this state, all the tags 11-13 can be identified for a short time.

### 〈Example 3〉

As shown in Fig. 8, 50 sheets of the tags 61 are produced, by comprising the antenna coils 14 and the RFID devices 16, and having the fuses 66 in the resonance circuits 24 where resonance frequency is the same.

Standard current by which the fuse 66 melts is 10mA.

These tags 61 are overlapped, in this state, the radio wave (the radio wave of the frequency in which the independent (not overlapped) tag resonates) is oscillated toward the tag 61 with changing the magnetic field intensity repeatedly from the interrogator as follows.

Magnetic field intensity is gradually enlarged by strengthening gradually intensity of the radio wave which the interrogator oscillates.

Thereby, the electromotive force of the antenna coils 14 of the tags 61 with the smallest amount of shifts from the resonance frequency of the independent tag, i.e., the pair of the outside of overlapped tag 61, become not less than the operating voltage of the RFID devices 16 of these tags 61.

At this time, the RFID device 16 of the above-mentioned tag 61 is operated and communicated with the interrogator and completed the communication, then the RFID device 16 passes large current (current exceeding 50mA) through resonance circuit 24 by it self in order to melt the fuse 66.

Then, when a signal from the communicating tag 61 stops, the interrogator reduces the magnetic field intensity.

Following, the magnetic field intensity is gradually enlarged again by strengthening gradually intensity of the radio wave which the interrogator oscillates.

Thereby, the electromotive force of the antenna coils 14 of the tags with the smallest amount of shifts from the resonance frequency of the independent tag, i.e., the pair of tags 61 which respectively adjoin the pair of the outside of overlapped tags 61 where the communication stopped, become not less than the operating voltage of the RFID devices 16 of these tags 61, since the resonance circuits 24 of the pair of the outside of overlapped tags 61 is opened.

At this time, the RFID device 16 of the tag 61 is operated and communicated with the interrogator and completed the communication, then the RFID device 16 passed large current (current exceeding 50mA) through resonance circuit 24 by it self in order to melt the fuse 66.

The all the tags 61 can be identified by repeating the above-mentioned operation.

### 〈Comparative example 1〉

Although not illustrated, three sheets of tags having the same resonance frequency are produced the switch or the fuse like examples 1-3 is not prepared in the resonance circuit.

When these tags were overlapped and the radio wave (the radio wave of the frequency in which the independent (not overlapped) tag resonates) of predetermined frequency is oscillated toward the tag from the interrogator in this state, each tag cannot be identified at all.

In addition, even if the above-mentioned two or more overlapped tags are arranged to near the transceiver antenna of an interrogator, where the magnetic field intensity is strong, only a part of tags was can be identified.

### AVAILABILITY ON INDUSTRY

As mentioned above, according to the present invention, since it comprises that a normally closed switch which opens and closes a resonance circuit is equipped in the resonance circuit which comprises an antenna coil and RFID device, when current flowed in the resonance circuit, a time constant circuit which opens and closes the switch for every predetermined time is connected to the switch and opening time of the switch may further change with a time constant circuit of each tag.

Thus, when the radio wave which can resonate an independent tag is oscillated toward two or more overlapped tags, only the switch of one sheet of the tag among two or more tags may close at a certain moment, and the switches of other tags may open.

At this time, since the mutual inductance does not arise, one sheet of the tag with the closed switch resonate and the tag can be identified between one sheet of the tag with the closed switch and other tags with opened switches opened.

Consequently, all the overlapped tags can be identified one by one serially for a short time.

Moreover, if the switch controller comprises so that it is equipped between the switch and the time constant circuit, and the switch controller can change the state where the switch controller opens and closes the switch with a signal from the time constant circuit and the state where the switch opens regardless of the signal from the time constant circuit.

After identifying one sheet of the tag like the above-mentioned, the switch controller may maintain at the state where the switch of the identified tag is opened, regardless of a signal from the time constant circuit.

Consequently, since the un-identified tag whose switch opens and closes decreases gradually, it can identify each tag still certainly.

Moreover, it comprises so that the fuse is equipped in the resonance circuit which comprise the antenna coil and RFID device and the fuse may melt down when current beyond predetermined value flows in the resonance circuit.

Thus when the radio wave which can resonate on independent tag is oscillated toward the overlapped tag and intensity of the radio wave is strengthened gradually, the pair of the outside of overlapped tags where the amount of shifts from the resonance frequency of the independent tag is the smallest, is identified first.

After identification, in these tags, since the RFID devices themselves pass the current, which beyond predetermined value, through in the resonance circuits in order to melt the fuses, the resonance circuits may be opened.

Next, the pair of tags which respectively adjoin the above-mentioned tags are identified respectively, the fuses of these tags are melted like the above-mentioned procedure and the resonance circuit may be opened.

Thus, all the overlapped tags can be identified by changing the state where the resonance circuits of the identified tags are opened compulsorily, and the tags are identified sequentially from the outside of overlapped tags to inside of overlapped tags.

Moreover, if the oscillation circuit which is able to sweep the radio wave oscillated from the transceiver antenna within a predetermined frequency range, is prepared in the interrogator and a predetermined frequency range is defined a frequency range contains all of the resonance frequency of two or more pieces of the tags which respectively change with the arrangement of the tags, the tags with closed switches or the tags with not melting fuses, even if there is very much number of sheets of the overlapped tags, the oscillation circuit sweeps the oscillation frequency from the maximum to minimum value of resonance frequency of two or more tags with the closed switches or the tags with not melting fuses, all the overlapped tags can be identified one by one.

Furthermore, if a predetermined frequency range which the oscillation circuit of an interrogator sweeps is defined so that a frequency range contains all of the resonance frequency of 1 or more tags, which respectively change by overlapping with one or more tags and one or more metal plates, even if the tags and the metal plates are overlapped, all the overlapped tags can be identified.

Because the oscillation circuits sweep oscillation frequency within the frequency range from the maximum to minimum value, of the resonance frequency of the overlapped tags.

### Fig. 1

- 11-13: tag
- 14: antenna coil
- 16: RFID device
- 22: voltage regulator
- 23: modulation/demodulation logic part
- 24: resonance circuit
- 26: switch
- 27: time constant circuit
- 28: switch controller

### Fig. 2

- 25a: transceiver antenna
- 25b: power-supply circuit
- 25c: radio-frequency (RF) circuit
- 25d: modulation/demodulation circuit
- 25f: memory
- 25h: input means

### Fig. 8

- 14: antenna coil
- 16: RFID device
- 22: voltage regulator
- 23: modulation/demodulation logic part
- 24: resonance circuit
- 61: tag
- 66: fuse

### Fig. 9

- 11-13: tag
- 14: antenna coil
- 16: RFID device
- 17: envelop (article)
- 25a: transceiver antenna
- 25b: power-supply circuit
- 25c: radio-frequency (RF) circuit
- 25d: modulation/demodulation circuit
- 25f: memory
- 25h: input means
- 85: interrogator
- 85i: oscillation circuit

### Fig. 10

- 11-13: tag
- 14: antenna coil
- 16: RFID device
- 17: envelop (article)
- 25a: transceiver antenna
- 25b: power-supply circuit
- 25c: radio-frequency (RF) circuit
- 25d: modulation/demodulation circuit
- 25f: memory
- 25h: input means
- 85: interrogator
- 85i: oscillation circuit
- 91: coin (metal plate)

## Claims

1. An identifying system of overlapped tags characterized by comprising;
in respect to tags (11- 13, 51) which have antenna coils (14, 54) and RFID devices (16) connected to the antenna coils (14, 54), and appended to articles (17),
normally closed switches (26) are equipped in resonance circuits (24) comprising the antenna coils (14, 54) and the RFID devices (16),
when current flows to the resonance circuits (24),
time constant circuits (27) which open and close the switches (26) for every predetermined time are connected to the switch (26)
and the opening time of the switches (26) by the time constant circuits (27), change with each tag (11- 13, 51).

2. An identifying system of overlapped tags mentioned in Claim 1. comprising;
a switch controller (28) is equipped between a switch (26) and a time constant circuit (27)
and the switch controller (28) can change the switch (26) into the state where it opens regardless of a signal from the time constant circuit (27)
or the state where it opens and closes with a signal from the time constant circuit (27)

3. An identifying system of overlapped tags characterized by comprising;
in respect to a tag (61) comprising an antenna coil (14) and a RFID device (16) connected to the antenna coil (14) and appended to articles,
a fuse (66) is equipped in a resonance circuit (24) comprising the antenna coil (14) and the RFID device (16)
and when the current beyond predetermined value flows in the resonance circuit (24), the fuse (66) melts.

4. An identifying system of overlapped tags mentioned in any Claims 1 to 3 by comprising;
in respect to an interrogator (85) which oscillates a radio wave from a transceiver antenna (25a) to tags (11-13, 51), and identifies the tags (11-13, 51), an oscillation circuit (85i) which is able to sweep the radio wave, oscillated from the transceiver antenna (25a), within a predetermined frequency range, is equipped
and the predetermined frequency range is defined so that a frequency range contains all of the resonance frequency of the tags (11-13, 51), which is respectively changed by overlapping the tags (11-13, 51), the tags (11-13, 51) with closed switches or the tag with not melting fuse.

5. An identifying system of overlapped tags mentioned in any Claims 1 to 3 by comprising;
in respect to an interrogator (85) which oscillates a radio wave from a transceiver antenna (25a) to tags (11-13, 51), and identifies the tags (11-13, 51), an oscillation circuit (85i) which is able to sweep a radio wave oscillated from the transceiver antenna (25a), within a predetermined frequency range, is equipped
and the predetermined frequency range is defined so that a frequency range contains all of the resonance frequency of one or more pieces of the tags (11- 13, 51), which is respectively changed by overlapping one or more pieces of the tags (11- 13, 51) and one or more metal plates (91).
